# EUROPÄISCHE PATENTSCHRIFT

(11) **EP 0 846 593 B1**
(45) Veröffentlichungstag und Bekanntmachung des Hinweises auf die Patenterteilung: **18.06.2003**
(21) Anmeldenummer: 97117383.6
(22) Anmeldetag: 08.10.1997
(51) Int. Cl.: B60Q 1/48

(54) **Einparkverfahren für ein Kraftfahrzeug**
Parking method for vehicle
Procédé pour garer un véhicule.

(30) Priorität: 06.12.1996 DE 19650808
(43) Veröffentlichungstag der Anmeldung: 10.06.1998
(73) Patentinhaber: ROBERT BOSCH GMBH, 70442 Stuttgart (DE)
(72) Erfinder: Weber, Jens, 65779 -kelkheim-Fischbach (DE); Hoetzel, Juergen, 64720 Michelstadt (DE); Tschiskale, Ega, 71272 Renningen (DE); Fehrenbach, Andreas, 71229 Leonberg (DE)

(56) Entgegenhaltungen:
- EP-A- 0 783 114
- DE-A- 3 813 083
- DE-A- 4 333 112
- FR-A- 2 502 773

## Beschreibung

### Stand der Technik

Die Erfindung geht von einem Einparkverfahren nach der Gattung des Hauptanspruchs aus. Aus der DE 38 13 083 A1, die die Merkmale des Oberbegriffs von Anspruch 1 zeigt, ist schon eine automatische Einparkvorrichtung für ein Kraftfahrzeug bekannt, bei der beispielsweise beim parallelen Einparken beim Rückwärtsfahren des Fahrzeuges so lange Lenkanweisungen an den Fahrer ausgegeben werden, bis das Fahrzeug seine endgültige Position in der Parklücke erreicht hat. Die Steuerung berechnet für den Einparkvorgang als Fahrtweg Kreisbögen, wobei zu Beginn des Einparkens das Lenkrad entweder links bzw. rechts bis zum Anschlag gedreht werden, um einen minimalen Wendekreis zu erhalten. In der Praxis hat sich jedoch gezeigt, daß dieses Verfahren nicht immer zufriedenstellend anwendbar ist, da die realen Wenderadien nicht bekannt sind. Hinzu kommen Toleranzen bedingt durch Reifendruck, Reifenabnutzung, fehlerhafte Spureinstellungen. Selbst innerhalb einer Serie eines Fahrzeugtyps sind die Toleranzen der Wenderadien so groß, daß für einen vorgegebenen Lenkwinkel der Fahrweg so ungenau berechnet wird, daß das Einparkergebnis nicht immer zufriedenstellend ist.

### Vorteile der Erfindung

Das erfindungsgemäße Einparkverfahren mit den Merkmalen des Hauptanspruchs hat demgegenüber den Vorteil, daß der Einparkvorgang unabhängig von den unterschiedlichen Wendekreisen bzw. Lenkradien, oder den Fertigungstoleranzen innerhalb einer Fahrzeugserie zuverlässig durchgeführt werden kann. Da für ein erfolgreiches Einparken der Beginn des Zurücksetzens entlang des Fahrtweges auf dem 1. Kreisbogen entscheidend ist, genügt es, wenn die Einparkvorrichtung den Fahrer nur bis zu diesem Teilweg unterstützt. Wenn der Fahrer diesen Teilweg erfolgreich abgefahren ist, kann er selbständig ohne große Mühen den Einparkvorgang auch ohne Ünterstützung durch die Einparkvorrichtung zu Ende führen. Fahrzeugtoleranzen werden dabei in einfacher Weise durch einen kürzeren oder längeren Kreisbogen vom Fahrer korrigiert. Unnötige Rangierversuche bei mißglücktem Ansatz des Einparkvorgangs werden dadurch vorteilhaft vermieden.

Durch die in den abhängigen Ansprüchen aufgeführten Maßnahmen sind vorteilhafte Weiterbildungen und Verbesserungen des im Hauptanspruch angegebenen Einparkverfahrens möglich. Da der 1. Teilweg beim Rückwärtsfahren in eine Parklücke von der Einparkvorrichtung sehr genau berechnet werden kann, kann ein zuverlässiger Zeitpunkt ausgegeben werden, an dem der Fahrer das Lenkrad in die Gegenrichtung zu drehen hat. Vorteilhaft wird dabei vermieden, daß sich das einparkende Fahrzeug beispielsweise zu weit der Bordsteinkante oder anderen Fahrzeugen nähert, die die Parklücke begrenzen.

Um auch relativ kleine Parklücken nutzen zu können, ist beim Zurücksetzen ein Vollausschlag des Lenkrades erforderlich, so daß das Fahrzeug die Parklücke auf einem möglichst engen Kreisbogen ansteuert. Die Länge des Kreisbogens (-segments) ist eine Funktion des Abstandes von dem parkenden Kraftfahrzeug und des Fahrzeuginnenradiuses unter der Nebenbedingung, daß die hintere äußere Ecke des vorderen Fahrzeugs umfahren wird.

Um dem Fahrer des Fahrzeugs das Ende des Teilweges zu verdeutlichen, wird vorzugsweise ein optisches oder aktustisches Signal ausgegeben.

Da der Fahrer beim Zurückfahren nicht immer die volle Übersicht hat, wird vorteilhaft ein aktueller Mindestabstand zum nächstliegenden Hindernis ausgegeben.

Eine besonders günstige Lösung ist, wenn bereits vorhandene Fahrzeugeinrichtungen, beispielsweise eine bereits in das Fahrzeug eingebaute Abstandsmeßeinrichtung verwendet wird. Diese Abstandsmeßeinrichtung besitzt bereits alle erforderlichen Sensoren und Anzeigen und kann mit einem einfachen Programm für die Unterstützung des Einparkens erweitert werden, so daß aufwendige Installationsarbeiten entfallen. Dieses Programm wird vorteilhaft in einem Modulbaustein gespeichert, so daß das bereits vorhandene Steuergerät auf einfache Weise kostengünstig erweiterbar ist. In dem Modulbaustein sind bevorzugt Daten für unterschiedliche Einparkarten gespeichert.

### Zeichnung

Ein Ausführungsbeispiel der Erfindung ist in der Zeichnung dargestellt und in der Beschreibung näher erläutert. Es zeigen
Figur 1 ein Blockschaltbild,
Figur 2 zeigt ein Diagramm mit einem bekannten Einparkvorgang nach dem Stand der Technik,
Figur 3 zeigt ein Diagramm mit einem erfindungsgemäßen Einparkvorgang und
Figur 4 zeigt ein Flußdiagramm eines erfindungsgemäßen Einparkverfahrens.

### Beschreibung des Ausführungsbeispiels

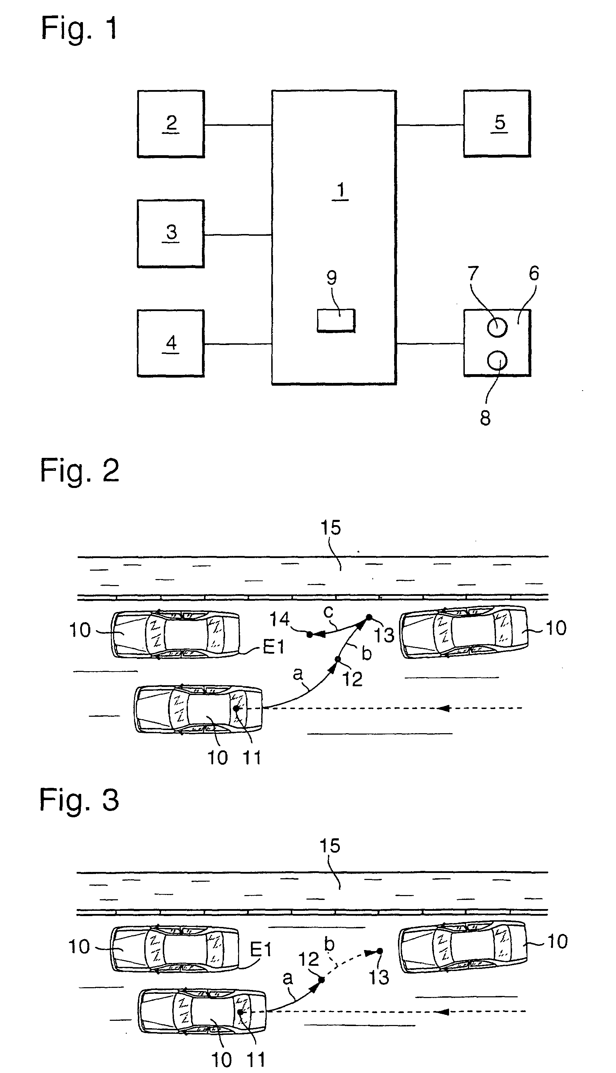

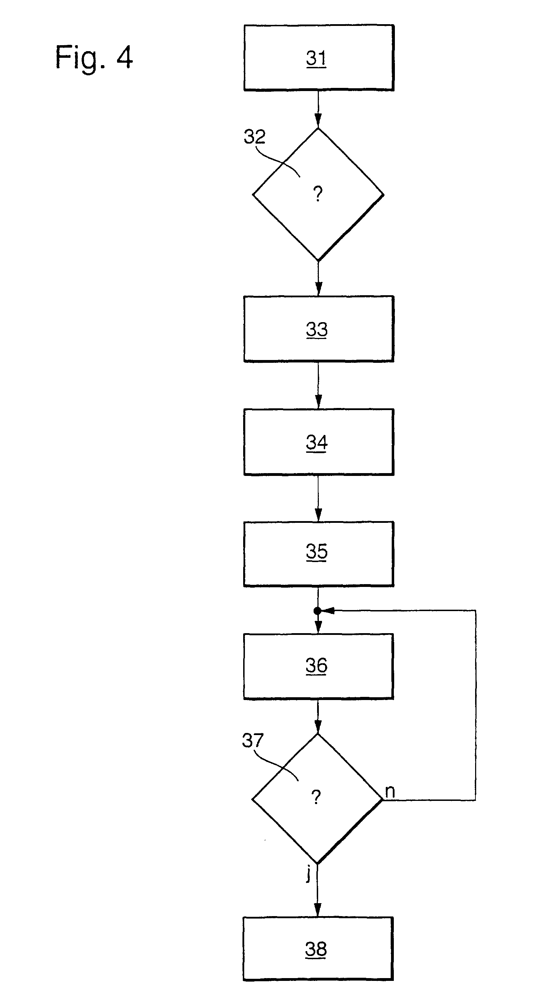

Figur 1 zeigt eine Steuerung 1, die einen Mikrocomputer mit mehreren Eingangs- und Ausgangsports aufweist. Des weiteren ist ein Speicher vorgesehen, in dem ein entsprechendes Steuerprogramm abgelegt ist. Die Steuerung 1 kann Teil eines bestehenden Abstandsmeßsystems, bzw. einer Einparkhilfe, sein, die mit entsprechenden Bewegungs- und Abstandssensoren 2, 3 ausgerüstet ist. Bei einem derartigen vorhandenen Gerät kann mit Hilfe eines Modulbausteins 9, in dem ein entsprechendes Steuerprogramm beispielsweise gemäß der Figur 4 abgelegt ist, zur erfindungsgemäßen Vorrichtung ausgebaut werden.

An die Eingänge der Steuerung 1 ist wenigstens ein Bewegungssensor 2 angeschlossen. Der Bewegungssensor ist beispielsweise als Radsensor oder Tachogeber ausgebildet und mißt die zurückgelegte Wegstrecke des Kraftfahrzeugs. Desweiteren sind Abstandssensoren 3 vorgesehen, die an geeigneten Stellen, vorzugsweise vorne, hinten und an der Seite des Fahrzeugs angeordnet sind. Optional ist vorgesehen, an einen Eingang der Steuerung 1 einen Winkelsensor 4 anzuschließen, mit dem der Lenkwinkel oder der Fahrwinkel des Kraftfahrzeugs überwacht werden kann. Das hat den Vorteil, daß die Ausgabe des Fahrtweges in Abhängigkeit von der Stellung des Lenkrades, bzw. der Räder, erfolgen kann und beliebige Lenkeinschläge vorgegeben werden können. Zur Aktivierung der Vorrichtung sind Bedienelemente 6 vorgesehen, so daß neben einer Aktivierungstaste 8 noch ein Schalter 7 vorgesehen ist, mit dem ein Parkmodus, beispielsweise Einparken seitlich links, seitlich rechts, schräg bzw. rechtwinklig zur Fahrbahn vorgewählt werden kann. Die einzelnen Einrichtungen sind im wesentlichen aus der DE 38 13 083 A1 bekannt und müssen daher im einzelnen nicht näher erläutert werden.

Anhand der Figur 2 wird zunächst erläutert, wie der Einparkvorgang beim bekannten Stand der Technik durchgeführt wird. Nachdem die Einparkvorrichtung aktiviert wurde, messen am Fahrzeug angeordnete Abstandssensoren 3 während der Vorbeifahrt die Länge einer Parklücke aus. Wird eine ausreichend große Parklücke gefunden, dann wird dem Fahrer des Fahrzeugs ein Stopsignal ausgegeben. Des weiteren erfolgt ein Hinweis, zunächst etwa gerade bis zu einem Bezugspunkt 11 zurückzufahren. Der Bezugspunkt 11 wird dabei so berechnet, daß das Fahrzeug mit geringsten Wenderadius in die Parklücke einbiegen kann. Im Falle des parallelen Einparkens auf der rechten Seite wird bei Erreichen des Bezugspunktes 11 ausgegeben, daß der Fahrer das Lenkrad bis zum Anschlag im Uhrzeigersinn nach rechts dreht und dann rückwärts weiterfährt. Als Bezugspunkt für das Fahrzeug wird vorteilhaft die Hinterachse genommen und die Bahnkurve für die Mitte des Fahrzeugs berechnet. Das Fahrzeug fährt dann auf einem Kreissegment a rückwärts bis es den Punkt 12 erreicht. An dieser Stelle wird der Fahrer aufgefordert, das Lenkrad in Gegenrichtung zu drehen und auf dem Kreissegment b bis zu einem Punkt 13 weiterzufahren. Nach Erreichen des Punktes 13 fährt das Kraftfahrzeug 10 dann in Vorwärtsrichtung bis zum Punkt' 14, bis es seine endgültige Fahrzeugposition erreicht hat. Die in Figur 2 vorgegebenen Kreissegmente sind nicht maßstäblich bezeichnet, sondern sollen nur die wesentliche Fahrtrichttung wiedergeben. Die endgültige Position des Kraftfahrzeugs 10 wird dann, wie in Figur 2 links dargestellt ist, erreicht. Die ideale Parkstellung ist erreicht, wenn ein gewisser Sicherheitsabstand zum Hindernis 15, beispielsweise der Bordsteinkante, erreicht ist.

Figur 3 zeigt dagegen den Ablauf des erfindungsgemäßen Einparkvorganges. Dabei wird der Fahrer des Kraftfahrzeugs 10 lediglich auf dem Teilweg a vom Bezugspunkt 11 bis zum Punkt 12 geführt. Im Punkt 12 erfolgt dann eine optische und/oder eine akustische Ausgabe, etwa mit der Anweisung, daß das Lenkrad in entgegengesetzte Richtung zu drehen ist und daß keine weitere Unterstützung durch die Einparkvorrichtung erfolgt. Der Fahrer fährt dann unabhängig von der Einparkvorrichtung entlang der gestrichelten Linie b bis zum Punkt 13, den er selbst beispielsweise durch Ablesen der von den Abstandssensoren 3 gemessenen Abständen zu einem nächstliegenden Hindernis fährt. Nach Erreichen des Punktes 13 fährt der Fahrer das Fahrzeug 10 in Vorwärtsrichtung, bis es seine Endposition erreicht, wie sie auch schon zu Figur 2 beschrieben wurde, falls es notwendig ist.

In weiterer Ausgestaltung der Erfindung ist vorgesehen, daß bei beliebigen Lenkwinkel eingeparkt werden kann, da der Fahrtweg nach dem tatsächlichen Lenk- bzw. Fahrtwinkel berechnet wird. Erforderlich ist hierbei ein Winkelsensor 4, wie er beispielsweise durch das Differenzsignal von 2 Radsensoren einer Achse gegeben ist.

Selbstverständlich kann bei einer ausreichend großen Parklücke auf das Vorwärtsfahren verzichtet werden, wenn der Fahrer des Kraftfahrzeugs 10 schon beim Rückwärtsfahren die richtige Position zum Hindernis 15 erreicht hat.

Anhand des Flußdiagramms der Figur 4 wird der Ablauf der Unterstützung für den Einparkvorgang näher erläutert. Wie bereits zu Figur 1 erläutert wurde, enthält die Steuerung im wesentlichen ein Programm, mit dem der Fahrtweg berechnet und die Lenkanweisungen bestimmt werden. Dieses Programm kann in weiterer Ausgestaltung der Erfindung als Modulbaustein 9 in eine bereits vorhandene Steuerung für die Abstandsmessung beim Einparken verwendet werden.

Der Funktionsablauf dieses Programms ist nun wie folgt. Wird in Position 31 ein Einparken des Fahrzeugs 10 gewünscht, dann wird mit der Aktivierungstaste 8 die Suche nach einer geeigneten Parklücke initialisiert. Alternativ ist vorgesehen, daß die Einparkvorrichtung kontinuierlich eine Parklücke sucht, aber nur auf Anforderung die nächste Parklücke ausgibt. Dieses hat den Vorteil, daß in jedem Fall, auch wenn der Fahrer die Initialisierung vergessen hatte, sofort eine Parkmöglichkeit angeboten bekommt.

Nach dem Initialisieren erfolgt in Position 32 die Abfrage, mit welchem Parkmodus eingeparkt werden soll. Wird ein Parkmodus gemäß der Figur 3 gewünscht, dann erfolgt mit Hilfe des Schalters 7 die Parklückenauswahl. Die Parklückenauswahl 7 kann dabei als Wippe oder Joystick oder mit der Aktivierungstaste 8 kombiniert derart ausgebildet sein, daß für die verschiedenen Bewegungsrichtungen dieses Schalters 7 ein bestimmter Parkmodus anwählbar ist (Position 33). In Position 33 sucht nun die Einparkvorrichtung eine geeignete Parklükke, die entsprechend den Fahrzeugabmessungen und des Fahrzeugtyps eine bestimmte Mindestlänge aufweisen muß. Ist im Vorbeifahren eine derartige Lücke gefunden, dann gibt die Einparkvorrichtung einen Stop-Befehl aus mit dem Hinweis, jetzt langsam zurückzufahren. Da die Einparkvorrichtung aufgrund der Signale des Bewegungssensors 2 stets die genaue Position des Fahrzeugs 10 in Relation zur Parklücke kennt, berechnet sie nun einen fiktiven Bezugspunkt 11 (Position 34). In Position 35 wird bei Erreichen dieses Bezugspunktes 11 auf der Ausgabe 5 akustisch und/oder optisch ausgegeben, daß der Fahrer das Lenkrad vorzugsweise bis zum Vollanschlag nach rechts drehen soll. Die Berechnung des Fahrweges erfolgt dabei vorzugsweise in der Art, daß bei vollem Lenkausschlag der Teilweg a ein Kreissegment, beispielsweise einen Viertelkreis bildet, wobei die Länge des Kreissegments unter Berücksichtigung des Abstands vom Hindernis und des Fahrzeugradius berechnet wird, wobei die Nebenbedingung erfüllt sein muß, daß die hintere Fahrzeugecke E1 des vorderen parkenden Fahrzeugs umfahren wird. Wird dagegen kein voller Lenkeinschlag durchgeführt, dann berechnet die Steuerung 1 gemäß Position 36 anhand der vom Bewegungssenor 2, den Abstandssensoren 3 und gegebenenfalls vom Winkelsensor 4 gemessenen Daten einen neuen Fahrweg a sowie einen zugehörigen Punkt 12, der das Ende des unterstützten Einparkens wiedergibt. In Position 37 wird dann überprüft, ob der Endpunkt 12 erreicht wurde. Ist das nicht der Fall, erfolgt die Fahrtwegmessung wie zuvor in Position 36 beschrieben wurde. Wurde der Punkt 12 gemäß der Position 37 erreicht, dann erfolgt in Position 38 die Ausgabe, daß der Fahrer vorzugsweise einen vollen Lenkausschlag in Gegenrichtung durchführen soll und den Parkvorgang nunmehr in eigener Regie durchführen kann. Dieser gestrichelt dargestellte Teilweg b bis zum Punkt 13 ist in der Praxis leicht zu erreichen, da das Fahrzeug durch die gestützte Führung auf dem Teilweg a schon eine optimale Position in Relation zu verfügbaren Parklücke eingenommen hat. Ein unnötiges Hin- und Herrangieren ist nicht mehr erforderlich.

## Patentansprüche

1. Einparkverfahren für ein Kraftfahrzeug, wobei mit einer Steuerung (1) Kreissegmente (a) für den möglichen Fahrtweg des Kraftfahrzeugs (10) in eine Parklücke berechnet werden, wobei entsprechende Fahrt- und Lenkanweisungen optisch und/oder akustisch an den Fahrer des Kraftfahrzeugs (10) ausgegeben werden, **dadurch gekennzeichnet, dass** ein Bezugspunkt (11) von der Steuerung berechnet wird, dass von der Steuerung die Fahrt- und Lenkanweisungen für einen rückwärtigen Einparkvorgang nur bis zu einem Endpunkt (12) eines ersten Kreisbogens (a) des Zurücksetzens ausgegeben wird, der von dem Bezugspunkt (11) zu dem Endpunkt (12) führt.

2. Einparkverfahren nach Anspruch 1, **dadurch gekennzeichnet, dass** das Lenkrad des Fahrzeugs bei einem Zurücksetzen voll eingeschlagen wird.

3. Einparkverfahren nach einem der vorhergehenden Ansprüche, **dadurch gekennzeichnet, dass** bei Erreichen des Endpunktes (12) des Kreisbogens (a) eine Lenkanweisung für ein Gegenlenken in die Gegenrichtung ausgegeben wird.

4. Einparkverfahren nach einem der vorhergehenden Ansprüche, **dadurch gekennzeichnet, dass** während des Einparkvorgangs der aktuelle Abstand zu einem in der Umgebung des Kraftfahrzeugs (10) befindlichen nächstliegenden Hindernis (15) von der Steuerung (1) ausgegeben wird.

5. Einparkverfahren nach einem der vorhergehenden Ansprüche, **dadurch gekennzeichnet, dass** bei einem Erreichen eines vorgegebenen Mindestabstands zu dem Hindernis (15) ein optisches und/oder akustisches Warnsignal von der Steuerung (1) ausgegeben wird.

## Claims

1. Parking method for a motor vehicle, circular segments (a) for the possible driving path of the motor vehicle (10) into a parking space being calculated using a controller (1), corresponding driving instructions and steering instructions being output visually and/or audibly to the driver of the motor vehicle (10), **characterized in that** a reference point (11) is calculated by the controller, **in that** the driving instructions and steering instructions for a reverse parking operation are output by the controller only as far as an end point (12) of a first circular arc (a) of the reverse movement, said circular arc (a) leading from the reference point (11) to the end point (12).

2. Parking method according to Claim 1, **characterized in that** the steering wheel of the vehicle is fully locked during a reverse movement.

3. Parking method according to one of the preceding claims, **characterized in that**, when the end point (12) of the circular arc (a) is reached, a steering instruction to perform an opposite steering manoeuvre in the opposite direction is output.

4. Parking method according to one of the preceding claims, **characterized in that**, during the parking process, the current distance from the closest obstacle (15) located in the surroundings of the motor vehicle (10) is output by the controller (1).

5. Parking method according to one of the preceding claims, **characterized in that**, when a predefined minimum distance from the obstacle (15) is reached, a visual and/or audible warning signal is output by the controller (1).

## Revendications

1. Procédé de manoeuvre de garage pour un véhicule automobile selon lequel une commande (1) calcule des segments de cercle (a) du trajet possible du véhicule (10) dans un intervalle de garage,
les indications de conduite et de braquage étant données par voie optique et/ou acoustique au conducteur du véhicule (10),
**caractérisé en ce qu'**
un point de référence (11) est calculé par la commande,
la commande émet les indications de conduite et de braquage pour une manoeuvre de garage en marche arrière seulement jusqu'à un point final (12) d'un premier arc de cercle (a) de la marche arrière, qui conduit du point de référence (11) au point terminal (12).

2. Procédé de manoeuvre de garage selon la revendication 1,
**caractérisé en ce que**
le volant du véhicule est braqué complètement lors d'une remise en marche arrière.

3. Procédé de manoeuvre de garage selon l'une des revendications précédentes,
**caractérisé en ce que**
lorsqu'on atteint le point final (12) de l'arc de cercle (a), une indication de braquage est donnée pour le contre-braquage dans la direction opposée.

4. Procédé de manoeuvre de garage selon l'une des revendications précédentes,
**caractérisé en ce que**
pendant la manoeuvre de garage la commande (1) émet la distance réelle par rapport à un obstacle (15) le plus proche se trouvant dans l'environnement du véhicule (10).

5. Procédé de manoeuvre de garage selon l'une des revendications précédentes,
**caractérisé en ce que**
lorsqu'on atteint une distance minimale prédéterminée par rapport à l'obstacle (15), la commande (1) émet un signal avertisseur optique et/ou acoustique.
